# NEUE EUROPÄISCHE PATENTSCHRIFT

(11) **EP 1 857 699 B2**
(45) Veröffentlichungstag und Bekanntmachung des Hinweises auf die Entscheidung über den Einspruch: **15.04.2020**
(45) Hinweis auf die Patenterteilung: 10.12.2008
(21) Anmeldenummer: 07008393.6
(22) Anmeldetag: 25.04.2007
(51) Int. Cl.: F16D 25/08

(54) **Nehmerzylinder und Hydraulisches System**
Slave cylinder and hydraulic system
Cylindre recépteur et système hydraulique

(30) Priorität: 17.05.2006 DE 102006023014
(43) Veröffentlichungstag der Anmeldung: 21.11.2007
(73) Patentinhaber: Schaeffler Technologies AG & Co. KG, 91074 Herzogenaurach (DE)
(72) Erfinder: Grabenstätter, Jan, 76593 Gernsbach (DE)

(56) Entgegenhaltungen:
- DE-A1- 4 109 125
- DE-A1- 4 120 643
- DE-A1- 4 120 643
- DE-A1- 4 407 665
- DE-A1- 19 523 011
- DE-A1- 19 636 399
- DE-C2- 3 427 791
- DE-T2- 69 307 295
- US-A- 4 684 003
- US-A- 4 686 003

## Beschreibung

Die vorliegende Erfindung betrifft einen Nehmerzylinder mit einem Gehäuse und einem darin beweglich angeordneten Kolben für ein hydraulisches System insbesondere für Kraftfahrzeuge sowie ein hydraulisches System mit einem Nehmerzylinder.

Zur Abdichtung eines Ringkolbens eines Nehmerzylinders eines Zentralausrückers vor Verschmutzung aus der Umgebung sind im Stand der Technik diverse Maßnahmen bekannt. So wird z.B. in der DE 4120643 vorgeschlagen, eine Staubhülse zwischen dem Ringkolben und einem axialen Fortsatz des Gehäuses anzuordnen. Nachteilig an einer derartigen Staubhülse nach Stand der Technik ist, dass diese als zylindrisches Bauteil eine relativ große Andruckkraft in radialer Richtung nach außen aufbringen muss, um eine Dichtwirkung zu erzielen. Daher ist bei der Bauweise nach Stand der Technik eine sehr steife Staubhülse notwendig, wobei eine entsprechend genaue Bearbeitung der abzudichtenden Flächen notwendig ist. In die Dichtflächen eindringender Staub oder sonstiger Schmutz führt dabei unweigerlich zu einer Verringerung der Dichtwirkung. In der DE 19523011A1 wird eine Ausrückvorrichtung für eine Reibkupplung mit einem Gehäuse beschrieben, bei der in dem zentrischen Ausnehmung des Gehäuses radial beabstandet zur Innenwand ein Führungsrohr eingesetzt ist, auf dem ein Kolben einen radialen Abstand zwischen dem Führungsrohr eingesetzt ist. In der DE19636399 wird ein Druckzylinder mit einer verschiebbaren Zwischenkammer beschrieben.

Eine Aufgabe der vorliegenden Erfindung ist es daher, eine Abdichtung des Kolbens gegenüber der Umgebung bereitzustellen, die bei einfacher Bauweise eine auf Dauer verlässliche Dichtwirkung bietet.

Dieses Problem wird gelöst durch einen Nehmerzylinder mit den Merkmalen des Anspruchs 1. Es ist dabei vorgesehen, dass das Dichtmittel zwischen zwei Anschlägen verschiebbar an dem Gehäuse befestigt ist. Es ist vorgesehen, dass die Anschläge einen vorderen Anschlag für eine vordere Stellung und einen hinteren Anschlag für eine hintere Stellung umfassen. Die Anschläge werden durch mindestens eine axial verlaufende Nut geformt. Die axial verlaufende Nut kann dabei ähnlich einer Nut für eine Nut-Feder-Kombination in das Gehäuse eingebracht sein. Dabei können auch mehrere axial verlaufende Nuten vorgesehen sein. Vorzugsweise ist vorgesehen, dass die Ringnut durch eine Kante im Übergang des Gehäuses von einem dickwandigen Bereich auf einen zylindrischen dünnwandigen Bereich des Gehäuses und einen radialen Vorsprung des dünnwandigen Bereichs des Gehäuses gebildet wird. Das Dichtmittel umfasst vorzugsweise mindestens eine Nase, die in die Nut eingreift. Bevorzugt ist vorgesehen, dass die Nut eine Ringnut ist. Entsprechend ist vorzugsweise vorgesehen, dass die Nase umlaufend an dem Dichtmittel ausgebildet ist. Der Kolben umfasst eine Hülse, insbesondere eine metallische Hülse, auf der das Dichtmittel reibschlüssig gelagert ist. Das Dichtmittel ist vorzugsweise ein im Wesentlichen becherförmiger Balg, insbesondere ein Kunststoff- bzw. Gummibalg. Der Balg hat dabei im Wesentlichen die Form eines Bechers mit einer Bohrung an seinem Becherboden, wobei die Bohrung die Hülse des Kolbens umfasst.

Das eingangs genannte Problem wird auch gelöst durch einen Hydraulisches System mit den Merkmalen des Aspruchs 6.

Im Folgenden wird ein Ausführungsbeispiel der Erfindung anhand der beiliegenden Zeichnungen erläutert. Dabei zeigen:
- Fig. 1: eine schematische Darstellung eines hydraulischen Systems anhand eines Ausführungsbeispiels einer Kupplungsausrückvorrichtung;
- Fig. 2: einen Schnitt durch einen erfindungsgemäßen Zentralausrücker in einer ersten Stellung;
- Fig. 3: einen Schnitt gemäß **Fig. 2** in einer zweiten Stellung des Zentralausrückers.

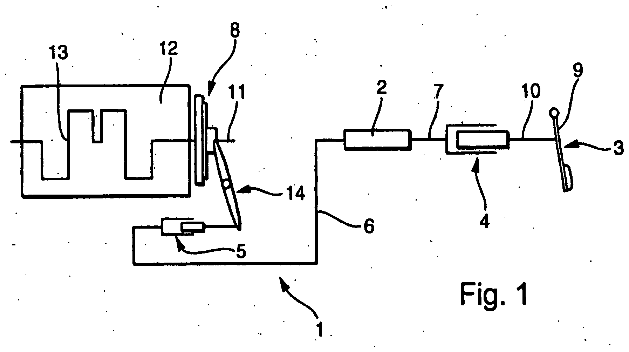

**Fig. 1** zeigt in schematischer Darstellung eine mögliche Ausgestaltung eines hydraulischen Systems 1 mit einem Druckbegrenzungsventil 2 anhand einer Kupplungsausrückvorrichtung 3 mit einem Geberzylinder 4 und einem Nehmerzylinder 5. Das Kupplungsausrücksystem 3 betätigt die Kupplung 8 hydraulisch durch Beaufschlagung des Geberzylinders 4 mittels eines Betätigungsgliedes 9, das ein Fußpedal, ein Aktor, beispielsweise ein elektrischer Aktor, oder dergleichen sein kann. Hierdurch wird mittels einer mechanischen Übertragung 10 Druck im Geberzylinder 4 aufgebaut, der über den Leitungsteil 7, über das Druckbegrenzungsventil 2 und den Leitungsteil 6 einen Druck im Nehmerzylinder 5 aufbaut. Der Nehmerzylinder 5 kann - wie in dem gezeigten Beispiel - konzentrisch um die Getriebeeingangswelle 11 angeordnet sein und sich axial an einem - nicht dargestellten - Getriebegehäuse abstützen und die nötige Ausrückkraft über ein Ausrücklager an der Kupplung 8, beziehungsweise an deren Ausrückelementen wie Tellerfeder, aufbringen. Weitere Ausführungsbeispiele können einen Nehmerzylinder 5, der über eine Ausrückmechanik einen Ausrücker betätigt und außerhalb der Kupplungsglocke angeordnet ist, vorsehen, wobei dieser mittels eines in hydraulischer Verbindung mit dem Geberzylinder stehenden im Nehmerzylindergehäuse untergebrachten Kolbens die Ausrückmechanik axial beaufschlagt. Zum Aufbringen der Ausrückkraft ist der Nehmerzylinder 5 jeweils gehäusefest am Getriebegehäuse, das hier nicht näher dargestellt ist, oder an einem anderen gehäusefesten Bauteil angebracht. Die Getriebeeingangswelle 11 überträgt bei geschlossener Kupplung 8 das Drehmoment der Brennkraftmaschine 12 auf ein nicht näher dargestelltes Getriebe und anschließend auf die Antriebsräder eines Kraftfahrzeuges. Das Druckbegrenzungsventil 2 ist zur Dämpfung von Schwingungen, die durch die Kurbelwelle und die Kupplung über den Nehmerzylinder in das hydraulische System eingebracht werden in den Leitungen 6, 7 angeordnet.

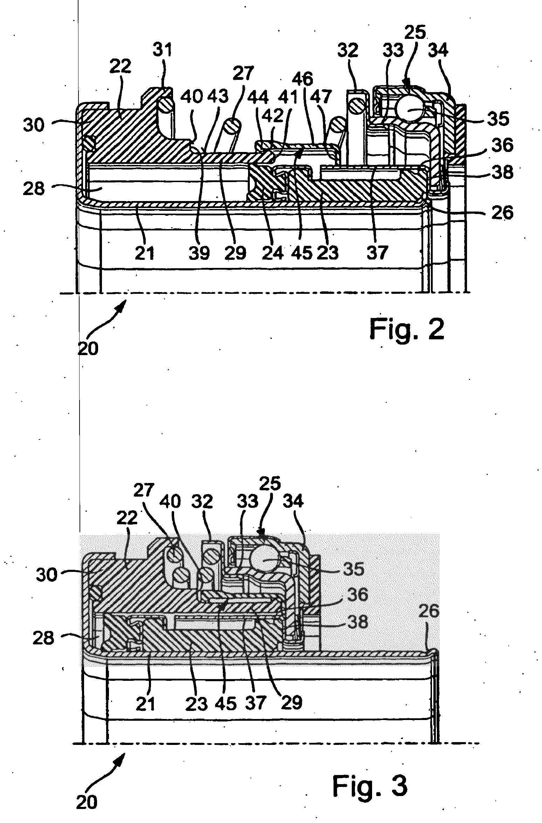

Fig. 2 zeigt einen Zentralausrücker 20 in einer ersten, vollständig ausgefahrenen Stellung, Fig. 3 zeigt den Zentralausrücker in einer zweiten, vollständig eingefahrenen Stellung. Der Zentralausrücker 20 mit einem Nehmerzylinder 5 des hydraulisches Systems 1 entsprechend Fig. 1 umfasst im Wesentlichen eine Führungshülse 21, ein Gehäuse 22 sowie einen zwischen Führungshülse 21 und Gehäuse 22 angeordneten Kolben 23. Das Gehäuse 22 und die Führungshülse 21 begrenzen einen im wesentlichen zylindertorusförmigen Druckraum 28, in dem der Kolben 23 gegenüber der Umgebung abgedichtet hydraulisch bewegt werden kann. Der Kolben 23 verfügt dazu über eine Nutringdichtung 24. An dem Kolben 23 ist ein Ausrücklager 25 angeordnet. Ein an der Führungshülse 21 angeordneter Anschlag 26 begrenzt den Weg des Kolbens 23. Zwischen Kolben 23 und Gehäuse 22 ist eine Vorspannfeder 27 angeordnet. Die Führungshülse 21, das Gehäuse 22 sowie der Kolben 23 begrenzen den Druckraum 28, der von einem hier nicht dargestellten Hydraulikanschluss mit Druck beaufschlagt werden kann. Der Hydraulikanschluss ist eine rohrartige Verlängerung als Zuführleitung des Gehäuses 22. Die Zuführleitung ist als eigenständiges Kunststoffbauteil hergestellt und mit dem Gehäuse 22 an einer Schweißstelle ultraschallverschweißt.

Das Gehäuse 23 umfasst einen im Wesentlichen zylindrischen dünnwandigen Bereich 29 sowie einen ebenfalls im Wesentlichen zylindrischen dickwandigen Bereich 30, der ein gehäuseseitiges Gegenlager 31 für die Vorspannfeder 27 umfasst. Die Vorspannfeder 27 drückt sich zum einem an dem gehäuseseitigen Gegenlager 31 ab, und zum anderen an einem kolbenseitigen Lagerring 32, der im vorliegenden Ausführungsbeispiel direkt mit einem Innenlager 33 des Ausrücklagers 25 zusammenwirkt. Das Ausrücklager 25 umfasst des Weiteren einen Außenlagerring 34, der z. B. auf Lamellenzungen einer hier nicht dargestellten Kupplung drückt. Zwischen Innenlagerring 33 und Außenlagerring 34 sind Kugeln 35 angeordnet und bilden so ein Kugellager als Ausrücklager. Der Kolben 23 umfasst ein beispielsweise aus einem Kunststoff oder einem Kunststoffverbundmaterial gefertigtes Kolbenelement 48 und umfasst an seiner Außenseite einer zylindrischen Hülse 36. Die Hülse 36 umfasst einen hohlzylindrischen Bereich 37 und einen scheibenförmigen Bereich 38 und umgreift den dem Ausrücklager 25 zugewandten Bereich des Kolbens 23 nach Art eines Bechers. Die Hülse 36 ist vorzugsweise aus Blech gefertigt, kann aber ebenso z.B. aus einem entsprechend widerstandsfähigen Kunststoffmaterial gefertigt sein. Der zylindrische dünnwandige Bereich 29 bildet bei seinem Übergang in den dickwandigen Bereich 30 einen vorderen Anschlag 39 in Form einer Kante 40 beim Übergang von dem dünnwandigen Bereich 29 auf den dickwandigen Bereich 30. Ein umlaufender radialer Vorsprung 41 an der der Kante 40 in Richtung des Ausrücklagers 25 zugewandten Seite des dünnwandigen Bereichs 29 bildet einen hinteren Anschlag 42. Zwischen der Kante 40 und dem radialen Vorsprung 41 wird somit eine umlaufende Ringnut 43 gebildet. In die umlaufende Ringnut 43 greift eine Nase eines Balges 45 ein. Der Balg 45 umfasst einen im Wesentlichen zylindrischen Bereich 46, an dessen dem Gehäuse 22 zugewandten Ende die Nase 44 angeordnet ist und an dessen dem Ausrücklager 25 zugewandten Bereich eine tellerartige Abkantung 47 angeordnet ist. Die tellerartige Abkantung 47 hat eine im Wesentlichen scheibenförmige Gestalt mit einem Innendurchmesser der Scheibe, der in etwa dem Außendurchmesser des hohlzylindrischen Bereichs 37 der Hülse 36 entspricht. Der Innendurchmesser der Abkantung 47 und der Außendurchmesser des hohlzylindrischen Bereiches 37 sind so bemessen, dass diese eine reibschlüssige Verbindung bilden. Der Reibschluss kann nach Überwindung einer Haltekraft gelöst werden, so dass eine Verschiebung der Abkantung 47 und damit des Balges 45 gegenüber dem hohlzylindrischen Bereich 37 und damit der Hülse 36 möglich ist. Die Reibung, die die Verbindung des Balges 45 mit der Hülse 36 bzw. der Abkantung 47 mit dem hohlzylindrischen Bereich 37 ausübt, ist größer als die Reibung, die bei einer Verschiebung des zylindrischen Bereiches 46 des Balges 45 gegenüber dem Gehäuse 22 entsteht. Bei einer Verschiebung des Kolbens 23 gegenüber dem Gehäuse 22 verschiebt sich also der Balg 45 zunächst gegenüber dem Gehäuse 22 und verharrt in seiner Stellung gegenüber dem Kolben 23 bzw. der Hülse 36. Sobald die Nase 44 an den vorderen Anschlag 39 bzw. den hinteren Anschlag 42, je nach Bewegungsrichtung des Kolbens 23 gegenüber dem Gehäuse 22, anstößt, erfolgt eine Verschiebung des Balges 45 gegenüber der Hülse 36 und damit auch gegenüber dem Kolben 23. Diese Maßnahme ermöglicht es, den von dem Balg 45 überstrichenen Bereich des Gehäuses 22 kleiner zu gestalten als den Hub des Kolbens 23 gegenüber dem Gehäuse 22.

### Bezugszeichenliste

- 1: Hydraulisches System
- 2: Druckbegrenzungsventil
- 3: Kupplungsausrückvorrichtung
- 4: Geberzylinder
- 5: Nehmerzylinder
- 6: Leitungsteil
- 7: Leitungsteil
- 8: Kupplung
- 9: Betätigungsgliedes
- 10: mechanischen Übertragung
- 11: Getriebeeingangswelle
- 12: Brennkraftmaschine
- 13: Kurbelwelle
- 14: Ausrückmechanik
- 19: Armierung
- 20: Zentralausrücker
- 21: Führungshülse
- 22: Gehäuse
- 23: Kolben
- 24: Nutringdichtung
- 25: Ausrücklager
- 26: Anschlag
- 27: Vorspannfeder
- 28: Druckraum
- 29: Zylindrischer dünnwandiger Bereich
- 30: Dickwandiger Bereich
- 31: Gegenlager
- 32: Lagerring
- 33: Innenlagerring
- 34: Aussenlagerring
- 35: Kugeln
- 36: Hülse
- 37: Hohlzylindrischer Bereich
- 38: Scheibenförmiger Bereich
- 39: Vorderer Anschlag
- 40: Kante
- 41: Radialer Vorsprung
- 42: Hinterer Anschlag
- 43: Ringnut
- 44: Nase
- 45: Balg
- 46: Zylindrischer Bereich
- 47: Abkantung
- 48: Kolbenelement

## Patentansprüche

1. Nehmerzylinder (5) mit einem Gehäuse (22) und einem darin beweglich angeordneten, mit einem Ausrücklager (25) verbundenen Kolben (23) für ein hydraulisches System insbesondere für Kraftfahrzeuge, der ein Dichtmittel (45) zur Abdichtung des Kolbens (23) gegenüber der Umgebung umfasst, wobei der Kolben (23) aus einem Kolbenelement (48) und einer mit ihm verbundenen zylindrische Hülse (36) gebildet wird, die seinen dem Ausrücklager (25) zugewandten Bereich umgreift, wobei die Hülse (36) einen hohlzylindrischen Bereich (37) und einen scheibenförmigen Bereich (38) umfasst und das Dichtmittel (45) einerseits am Kolben (23) reibschlüssig und gegen den Reibschluss axial verschiebbar befestigt ist und andererseits am Gehäuse (22) frei zwischen zwei Anschlägen (39, 42) verschiebbar ist, wobei das Dichtmittel (45) einen zylindrischen Bereich (46) umfasst, an dessen dem Gehäuse (22) zugewandten Ende eine Nase (44) angeordnet ist und an dessen dem Ausrücklager (25) zugewandten Bereich eine tellerartige Abkantung (47) angeordnet ist, wobei die tellerartige Abkantung (47) eine scheibenförmige Gestalt mit einem Innendurchmesser aufweist, der an den Außendurchmesser des hohlzylindrischen Bereiches (37) der Hülse (36) angepasst ist, wobei das Dichtmittel (45) auf der Hülse (36) reibschlüssig gelagert ist,
wobei das Dichtmittel (45) zwischen den zwei Anschlägen (39, 42) verschiebbar an dem Gehäuse (22) befestigt ist,
wobei die Anschläge (39, 42) einen vorderen Anschlag (39) für eine vordere Stellung und einen hinteren Anschlag (42) für eine hintere Stellung umfassen, **dadurch gekennzeichnet, dass**
die Anschläge (39, 42) durch mindestens eine axial verlaufende Nut (43) geformt werden.

2. Nehmerzylinder nach Anspruch 1, **dadurch gekennzeichnet, dass** die Ringnut (43) durch eine Kante (40) im Übergang des Gehäuses (22) von einem dickwandigen Bereich (30) auf einen zylindrischen dünnwandigen Bereich des Gehäuses (22) und einen radialen Vorsprung (41) des dünnwandigen Bereichs des Gehäuses (22) gebildet wird.

3. Nehmerzylinder nach einem der Ansprüche 1 oder 2, **dadurch gekennzeichnet, dass** die Nase (44)in die Nut (43) eingreift.

4. Nehmerzylinder nach Anspruch 1 bis 3, **dadurch gekennzeichnet, dass** die Nase (44) umlaufend an dem Dichtmittel (45) ausgebildet ist.

5. Nehmerzylinder nach einem der Ansprüche 1 bis 4, **dadurch gekennzeichnet, dass** das Dichtmittel (45) ein becherförmiger Balg ist.

6. Hydraulisches System, insbesondere für Kraftfahrzeuge, umfassend einen Nehmerzylinder (5) mit einem Gehäuse (22) und einem darin beweglich angeordneten, mit einem Ausrücklager (25) verbundenen Kolben (23), der mittels eines Dichtmittels (45) gegenüber der Umgebung abgedichtet ist, einen Geberzylinder (4) und eine diese verbindende Druckmediumsleitung (6, 7), **gekennzeichnet durch** einen Nehmerzylinder nach zumindest einem der vorhergehenden Ansprüche.

## Claims

1. Slave cylinder (5) with a housing (22) and a piston (23), which is arranged movably therein and is connected to a disengagement bearing (25), for a hydraulic system, in particular for motor vehicles, said slave cylinder comprising a sealing means (45) for sealing the piston (23) in relation to the surroundings, wherein the piston (23) is formed from a piston element (48) and a cylindrical sleeve (36) which is connected to the latter and engages around the region thereof facing the disengagement bearing (25), wherein the sleeve (36) comprises a hollow-cylindrical region (37) and a disc-shaped region (38) and the sealing means (45) firstly is fastened to the piston (23) in a frictionally connected manner and so as to be axially displaceable counter to the frictional connection and secondly is displaceable freely between two stops (39, 42) on the housing (22), wherein the sealing means (45) comprises a cylindrical region (46), at the end of which facing the housing (22) a lug (44) is arranged and on the region of which facing the disengagement bearing (25) a plate-like bevelling (47) is arranged, wherein the plate-like bevelling (47) has a disc-shaped configuration with an inside diameter which is adapted to the outside diameter of the hollow-cylindrical region (37) of the sleeve (36), wherein the sealing means (45) is mounted on the sleeve (36) in a frictionally connected manner, wherein the sealing means (45) is fastened displaceably to the housing (22) between the two stops (39, 42), wherein the stops (39, 42) comprise a front stop (39) for a front position and a rear stop (42) for a rear position, **characterized in that** the stops (39, 42) are formed by at least one axially running groove (43).

2. Slave cylinder according to Claim 1, **characterized in that** the annular groove (43) is formed by an edge (40) in the transition of the housing (22) from a thick-walled region (30) to a cylindrical thin-walled region of the housing (22) and by a radial projection (41) of the thin-walled region of the housing (22).

3. Slave cylinder according to either of Claims 1 and 2, **characterized in that** the lug (44) engages in the groove (43).

4. Slave cylinder according to Claims 1 to 3, **characterized in that** the lug (44) is formed in an encircling manner on the sealing means (45).

5. Slave cylinder according to one of Claims 1 to 4, **characterized in that** the sealing means (45) is a cup-shaped bellows.

6. Hydraulic system, in particular for motor vehicles, comprising a slave cylinder (5) with a housing (22) and a piston (23) which is arranged movably therein, is connected to a disengagement bearing (25) and is sealed in relation to the environment by means of a sealing means (45), and a master cylinder (4) and a pressure medium line (6, 7) connecting said slave cylinder and master cylinder, **characterized by** a slave cylinder according to at least one of the preceding claims.

## Revendications

1. Cylindre récepteur (5) comprenant un boîtier (22) et un piston (23) disposé de manière déplaçable dans celui-ci, connecté à un palier de débrayage (25) pour un système hydraulique, en particulier pour des véhicules automobiles, qui comprend un moyen d'étanchéité (45) pour l'étanchéité du piston (23) par rapport à l'environnement, le piston (23) étant formé d'un élément de piston (48) et d'un manchon cylindrique (36) connecté à celui-ci, qui vient en prise autour de sa région tournée vers le palier de débrayage (25), le manchon (36) comprenant une région cylindrique creuse (37) et une région en forme de disque (38) et le moyen d'étanchéité (45) étant fixé d'une part par engagement par friction au piston (23) et de manière déplaçable axialement à l'encontre de l'engagement par friction, et d'autre part pouvant être déplacé librement au niveau du boîtier (22) entre deux butées (39, 42), le moyen d'étanchéité (45) comprenant une région cylindrique (46) au niveau de l'extrémité, tournée vers le boîtier (22), de laquelle est disposé un ergot (44) et au niveau de la région, tournée vers le palier de débrayage (25), de laquelle est disposé un rebord en forme de plateau (47), le rebord en forme de plateau (47) présentant une forme en forme de disque avec un diamètre intérieur, qui est adapté au diamètre extérieur de la région cylindrique creuse (37) du manchon (36), le moyen d'étanchéité (45) étant supporté par engagement par friction sur le manchon (36),
le moyen d'étanchéité (45) étant fixé de manière déplaçable entre les deux butées (39, 42) au niveau du boîtier (22),
les butées (39, 42) comprenant une butée avant (39) en position avant et une butée arrière (42) en position arrière,
**caractérisé en ce que**
les butées (39, 42) sont formées par au moins une rainure (43) s'étendant axialement.

2. Cylindre récepteur selon la revendication 1,
**caractérisé en ce que** la rainure annulaire (43) est formée par une arête (40) dans la transition du boîtier (22) d'une région à paroi épaisse (30) à une région à paroi mince cylindrique du boîtier (22) et par une saillie radiale (41) de la région à paroi mince du boîtier (22).

3. Cylindre récepteur selon l'une quelconque des revendications 1 et 2, **caractérisé en ce que** l'ergot (44) s'engage dans la rainure (43).

4. Cylindre récepteur selon les revendications 1 à 3,
**caractérisé en ce que** l'ergot (44) est réalisé sur le pourtour au niveau du moyen d'étanchéité (45).

5. Cylindre récepteur selon l'une quelconque des revendications 1 à 4, **caractérisé en ce que** le moyen d'étanchéité (45) est un soufflet en forme de godet.

6. Système hydraulique, en particulier pour véhicules automobiles, comprenant un cylindre récepteur (5) avec un boîtier (22) et un piston (23) disposé de manière déplaçable dans celui-ci, connecté à un palier de débrayage (25), qui est étanchéifié par rapport à l'environnement au moyen d'un moyen d'étanchéité (45), un cylindre émetteur (4) et une conduite de fluide sous pression (6, 7) reliant ceux-ci, **caractérisé par** un cylindre récepteur selon au moins l'une quelconque des revendications précédentes.
